# EUROPEAN PATENT APPLICATION

(11) **EP 1 513 347 A1**
(43) Date of publication of application: **09.03.2005**
(21) Application number: 03730842.6
(22) Date of filing: 05.06.2003
(51) Int. Cl.: H04N 7/173

(54) **DEVICE AND METHOD FOR DIRECTING PROGRAM**

(30) Priority: 10.06.2002 JP 2002168862
(71) Applicant: PFU LIMITED, Kahoku-gun Ishikawa 929-1192 (JP)
(72) Inventor: ITOH, Yasunari, Kahoku-gun, Ishikawa 929-1192 (JP)
(74) Representative: Reichel, Wolfgang, Dipl.-Ing.
(86) International application number: PCT/JP2003/007133
(87) International publication number: WO 2003/105477

(57) **Abstract**

A system 1 broadcasts a program, aggregates instruction data from audience members, and advances the program in accordance with a choice corresponding to the result of the aggregation. A broadcasting system 11 broadcasts a program. Aggregation control means 13 receives and aggregates instruction data from audience members. Aggregating means 14 receives and aggregates, in real time, instruction data from audience members who watch the program, in accordance with instruction from the aggregation control means 13. Directing means 17 advances in real time the program in accordance with the aggregation result 18. A terminal 2 allows the respective audience member 20 to receive the broadcast program, display it on a screen for watching the same, and transmit instruction data 25 to a transmission destination. Display means 23 displays the received program and a presented rule on the screen. Selection means 24 selects one of choices regarding the program or the like and displayed on the screen.

## Description

### TECHNICAL FIELD

The present invention relates to a directing apparatus and method for directing a program, and more particularly to a directing apparatus and method which receive and aggregate instruction data regarding a broadcast program from audience members who receive and watch the program, and advance the program in real time in accordance with a choice corresponding to the result of the aggregation.

### BACKGROUND ART

Conventionally, a program broadcast to an audience is typically directed by the program creator. For example, in a game viewing program, the program creator selects one of a plurality of choices on the basis of contingency of dice or a roulette wheel, and directs the program in accordance with the selected choice. The program creator advances the program by repeating the above in order to enable the audience to enjoy the progress of the program that proceeds on the basis of contingency.

As described above, in the conventional game viewing program, the program creator changes the direction on the basis of contingency. However, the strengths of individual instructions of audience members are not reflected in the program in real time, nor are the levels of enthusiasm of individual audience members. Therefore, the conventional program direction has a problem in that it fails to arouse the interest of the audience.

### DISCLOSURE OF THE INVENTION

An object of the present invention is to solve the above-described problem through repetition of a procedure of presenting a rule to audience members, aggregating instruction data from the audience members, the data being weighted on the basis of the levels of enthusiasm of the audience members, choosing one of alternatives in accordance with the result of the aggregation, and advancing the program in accordance with the rule, to thereby reflect the audience's enthusiastic directing instruction in the program in real time.

A system of the present invention is adapted to broadcast a program, aggregate instruction data from an audience, advance the program in accordance with a choice corresponding to the result of the aggregation, and includes, among other elements, a broadcasting system, aggregating means, and directing means. The broadcasting system broadcasts a program. The aggregating means aggregates, in real time, instruction data from audience members who watch the program. The directing means directs (advances) in real time the program in accordance with a choice corresponding to the result of the aggregation. A terminal allows the respective audience member to receive the broadcast program, display it on a screen for watching the same, and transmit instruction data.

The broadcasting system broadcasts a program, and the terminal receives the broadcast program, displays it on a screen, and produces sound. The audience member watches the program, and enters and transmits the instruction data in relation to the program. The aggregating means of the system receives and aggregates the instruction data. The directing means of the system advances the program in accordance with a choice corresponding to the result of the aggregation. At that time, the directing means displays on the screen, along with the program, the choice corresponding to the result of the aggregation.

### BRIEF DESCRIPTION OF DRAWINGS

FIG. 1 is a diagram showing the configuration of a system of the present embodiment.
FIG. 2 is a flowchart for explaining operation of the present invention (entirety).
FIG. 3 shows an example scene in relation to the present invention.
FIG. 4 shows diagrams for explaining the present invention (example manner of showing a rule).
FIG. 5 is a table showing an example of instruction data used in the present invention.
FIG. 6 is a flowchart for explaining operation of the present invention (generation of instruction data).
FIG. 7 is a diagram showing an aggregation system of the present invention.
FIG. 8 shows diagrams for explaining operation of the present invention (aggregation, part 1).
FIG. 9 is a flowchart for explaining operation of the present invention (aggregation, part 2).
FIG. 10 shows diagrams for explaining the present invention (display of aggregation result).
FIG. 11 is a table showing an example of log data of the present invention.
FIG. 12 is a table showing an example rule of the present invention.
FIG. 13 shows flowcharts for explaining operation of the present invention (specific examples).

### BEST MODE FOR CARRYING OUT THE INVENTION

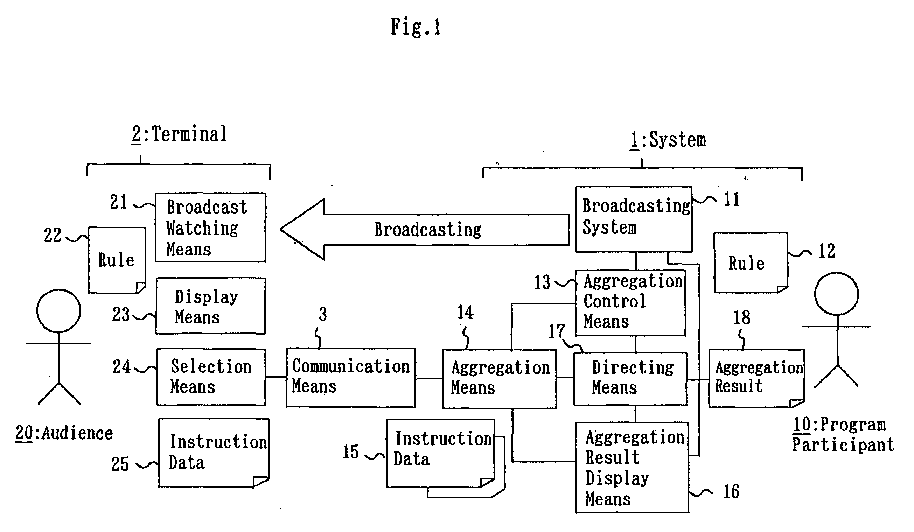

An embodiment of the present invention and its operation will now be successively described in detail with reference to FIGS. 1 to 13. FIG. 1 is a diagram showing the configuration of a system of the present invention.

A program participant 10 is a performer who appears in a program to be broadcast in real time. A rule 12 in relation to the program is presented, and the program participant 10 performs in accordance with the result of aggregation of instruction data from audience members.

A system 1 is adapted to broadcast a program, aggregate instruction data from the audience members, and advance the program in accordance with a choice corresponding to the result of the aggregation. The system 1 includes the following constituent elements 11 to 18.

A broadcasting system 11 broadcasts a program via a wireless or wired network or over the Internet. At that time, the broadcasting system 11 transmits a "transmission destination (address or the like) of instruction data" which differs among regions where the audience members view the program, networks, and providers.

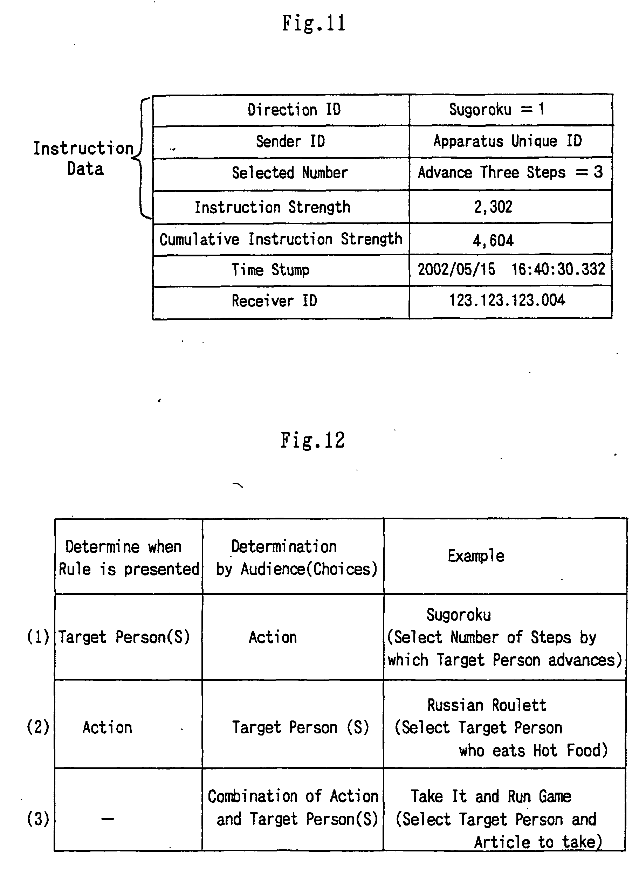

The rule 12 defines the manner of progress of the program. As shown in FIG. 12, which will be described later, a program participant or an action is designated when the rule is presented during the program; an action or a program participant is determined on the basis of the result of aggregation of instruction data from the audience members; and the determined program participant is requested to perform a designated action, whereby the program is advanced while being broadcast.

Aggregation control means 13 performs control for receiving and aggregating instruction data from the audience members. For example, the aggregation control means 13 controls the time at which aggregation of instruction data starts and the time at which aggregation of instruction data ends, so as to match the progress of the program.

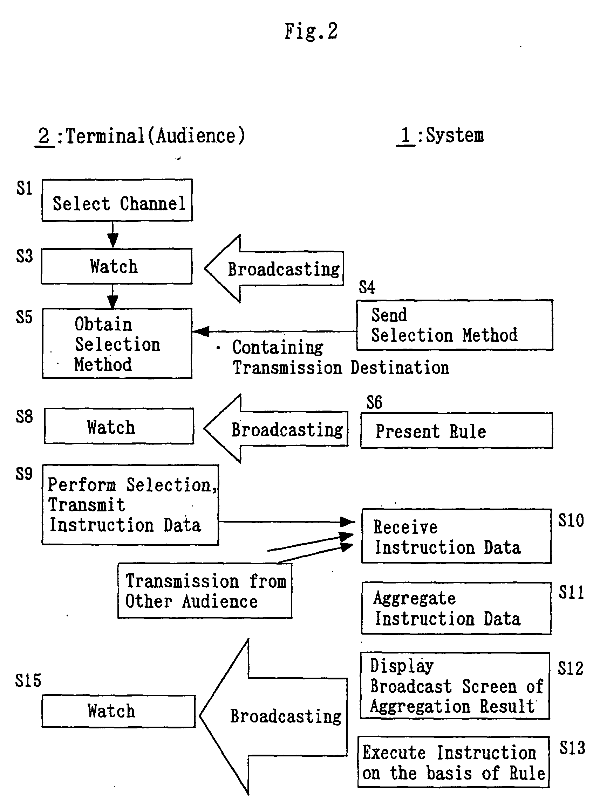

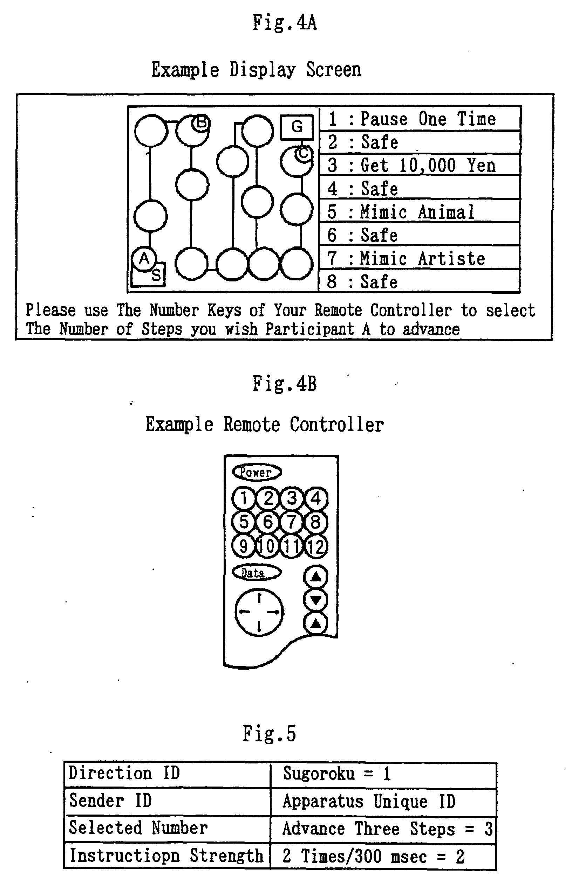

Aggregating means 14 receives and aggregates, in real time, instruction data 15 from the audience members, in accordance with an instruction from the aggregation control means 13. The instruction data 15 are instruction data received from the audience members (see FIG. 5). An aggregation result 18 is obtained through real-time aggregation of the instruction data received from the audience members. Aggregation result display means 16 displays the aggregation result 18 on, for example, a screen on which the program is displayed. Directing means 17 directs (advances) in real time the program in accordance with the aggregation result 18 (which will be described later with reference to FIGS. 2 to 13).

A terminal 2 allows the respective audience member 20 to receive the broadcast program, display it on a screen for watching the same, and transmit instruction data 25 to the transmission destination. The terminal 2 includes the following constituent elements 21 to 25.

The respective audience member 20 watches a broadcast program, and enters instruction data for the watched program and sends the data to the system 1.

Broadcast watching means 21 receives the broadcast program and allows the audience member to watch the program. A rule 22 is a rule presented on the screen or provided in the form of sound (see FIG. 12, etc.).

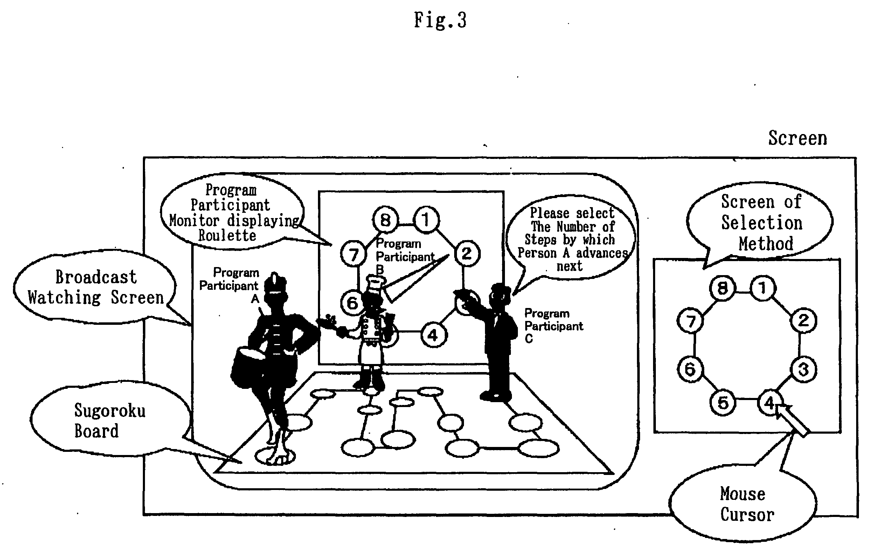

Display means 23 displays the received program on the screen, and also displays the presented rule on the screen (see FIG. 3, etc.). Selection means 24 enables the audience member to select one of a plurality of choices which are displayed on the screen in relation to the program or the like (see FIG. 3, etc.). The instruction data 25 are data which represent a choice selected by use of the selection means 24 (see FIG. 5). Communication means 3 for transmitting the instruction data and other data from the terminal 2 to the system 1 consists of, for example, the Internet or a phone network.

Next, the operation of the system of FIG. 1 will be described in detail in accidence with the steps of the flowchart of FIG. 2. FIG. 2 shows a flowchart for explaining overall operation of the present invention. The system 1 and the terminal 2 in FIG. 2 correspond to the system 1 and the terminal 2 in FIG. 1.

In step S1, the audience member selects a channel by use of the terminal 2. In step S3, the audience member receives a broadcast program of the selected channel, and displays it on the screen so as to watch the broadcast. For example, the audience member watches a program displayed in a left-hand portion of the screen of FIG. 3, which will be described later.

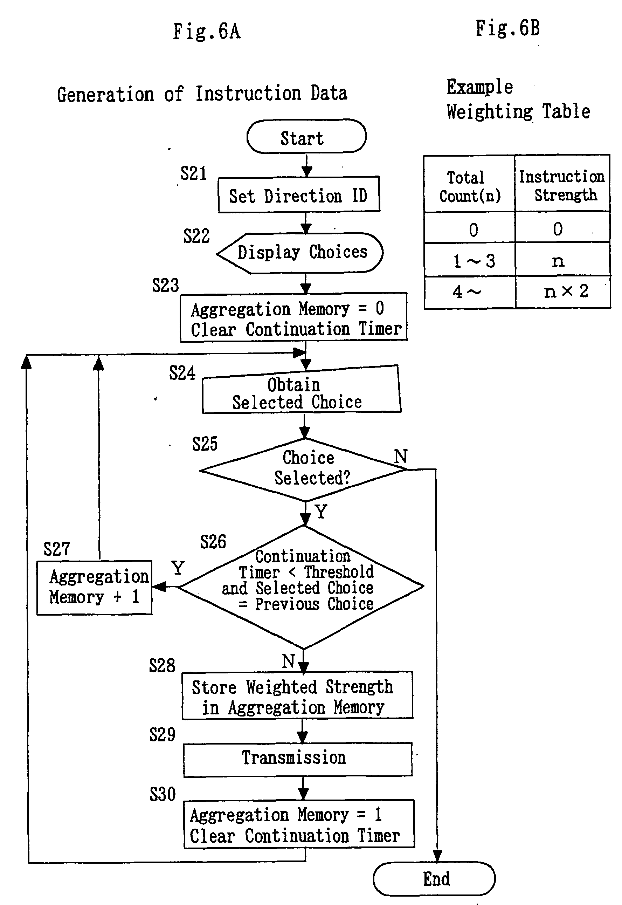

When the system 1 transmits data indicating a selection method (S4), the terminal 2 obtains the selection method and displays the same (S5). For example, as shown in a right-hand portion of the screen of FIG. 3, which will be described later, the system 1 transmits data indicating a selection method of selecting one of first through eighth choices; and the terminal 2 displays the selection method in the right-hand portion of the screen of FIG. 3. A that time, the terminal 2 receives and stores a transmission destination of instruction data (an address which differs among regions where the audience members view the program, networks, and providers). Moreover, the system 1 transmits a weighting table shown in FIG. 6B, data such as a timer value (threshold), and a program for generating instruction data (program for executing the processing shown in FIG. 6A). The terminal 2 receives and stores the thus-transmitted table, data, and program.

When the system 1 presents a rule (S6) and broadcasts the rule, the audience member views the rule (S8). For example, as shown in FIG. 3 to be described later, the system 1 presents a rule in relation to a program (in this example, a rule of *sugoroku* (Japanese Parcheesi) and notifies the audience member of the rule.

In step S9, the audience member selects a choice, and transmits as instruction data a numerical value corresponding to the selected choice. For example, under a condition that the program is shown in the left-hand portion of the screen of FIG. 3, the audience member selects one of the first to eighth choices displayed in the right-hand portion of the screen of FIG. 3, each representing the number of steps by which the program participant must advance, and transmits the selected number in the form of instruction data (see FIG. 5). The system 1 receives the instruction data transmitted from the audience members (S10) and aggregates the instruction data in real time (S11).

The system 1 displays a broadcast screen indicating the result of the aggregation (S12). For example, the system display a numerical value corresponding to a choice selected by the largest number of audience members (hereinafter called "most popular choice"). Moreover, the system performs the instruction on the basis of the rule (S13). For example, in the case of the *sugoroku* shown in FIG. 3, in accordance with the rule of the *sugoroku,* the designated program participant advances (walks) by the number of steps displayed in step S12 and corresponding to the selected choice. Further, in the case where the program participant is to perform an action upon reaching a certain step, the program participant performs the action when reaching the step. The result of the aggregation and the performance are broadcast; and the terminal displays the same on the screen, whereby the audience members can watch the result of the aggregation and the performance (S15).

As described above, while watching the program, the audience members transmit a selected choice to the system 1 in the form of instruction data; and the system 1 aggregates instruction data, causes the program participant to perform an action in accordance with, for example, the most popular choice, and broadcasts the performance, whereby the audience members can watch the performance in real time. These steps will be described successively in detail.

FIG. 3 shows an example scene in relation to the present invention. This is an example scene of a broadcast program displayed on the terminal 2 of the respective audience member. Here, an example scene of a *"sugoroku"* program is presented. In FIG. 3, an example scene of the *sugoroku* program is displayed on the left-hand portion of the screen, wherein program participants A, B, and C have respective roles, as shown in FIG. 3.

An example screen for showing a selection method is illustrated in the right-hand portion of the screen. This is an example screen for the case where the audience selects a number of steps by which the program participant A displayed in the left-hand portion is requested to move, by selecting one of first to eighth choices by use of a mouse cursor, and transmits the number to the system 1 in the form of instruction data. The system 1 aggregates instruction data transmitted from a large number of audience members. When a number corresponding to the most popular choice is determined, the determined number is displayed in the left-hand portion to be located in a background portion of the screen. For example, a rotating roulette wheel is controlled to gradually decelerate and stop at a position corresponding to the selected value (number). This is broadcast and is displayed on the terminal. When the roulette wheel stops at the value (number) corresponding to the most popular choice, the program participant A advances (walks) by a number of steps, the number corresponding to the number at which the roulette wheel has stopped. This is broadcast and is displayed on the terminal. When an action is set for the position at which the program participant A stops, the program participant A performs the set action, and the performance is broadcast and displayed.

As described above, a program (sugoroku in the present embodiment) is displayed in the left-hand portion of the screen of FIG. 3, and choices (first to eight choices) are displayed in the right-hand portion thereof. Each audience member selects and transmits a choice. The choices are aggregated, and the roulette wheel displayed in the left background portion is gradually decelerated and is stopped at a position corresponding to a value corresponding to the most popular choice. The program participant A is requested to advance by a number of steps, the number corresponding to the position at which the roulette wheel has stopped and corresponding to the most popular choice. Thus, instructions from the audience members can be reflected in the program in real time.

FIG. 4 shows diagrams for explaining the present invention (example manner of showing a rule). FIG. 4A shows an example display screen, and FIG. 4B shows an example remote controller.

In FIG. 4A, a left-hand portion of the screen shows a board used in the *"sugoroku"* program. Letters A, B, and C in FIG. 4A show steps (positions) at which the program participants A, B, and C stop, respectively. A right-hand portion of the screen shows actions to be performed at respective positions (performances by the program participants).

In a state in which the board and actions are displayed, as described in the bottom line of the screen, a message "Please use the number keys of your remote controller to select the number of steps you wish participant A to advance." is displayed or spoken. When the audience member enters a number of steps by which the participant A is to move by use of the number keys of the remote controller exemplified in FIG. 4B, the number is transmitted to the system 1 as instruction data.

The remote controller shown in FIG. 4B is used, for example, to select a channel to be received by the terminal 2. After the message at the bottom line is displayed or spoken in a state in which the screen of FIG. 4A is displayed, the audience member uses the number keys of the remote controller of the terminal 2 to enter a number of steps by which the participant A is to move. The thus-entered number is transmitted to the system 1 as instruction data. The system 1 successively aggregates in real time instruction data from a large number of (e.g., several million) audience members by use of a group of servers hierarchicaly connected, displays a number corresponding to, for example, the most popular choice, and requests the program participant A (person A) to advance by the number of steps. When an action (e.g., mimicking an animal) is set for the position where the program participant A stops, the program participant A is asked to perform the set action, which is captured and broadcast in real time. This action is displayed on the screen, as shown in the left-hand portion of FIG. 3, and the audience watches the same.

FIG. 5 shows example instruction data used in the present invention. The example instruction data-including, for example, a value which the audience member has selected from choices upon watching the program and being transmitted to the system 1-includes the following data items as shown in FIG. 5.
· Direction ID:
· Sender ID:
· Selected number:
· Strength of instruction:
· Other information:

The direction ID is used to uniquely determine choices which are provided to reflect instructions of the audience member. The sender ID represents the ID of the terminal from which data are transmitted. The selected number represents a number selected by the audience member. The strength of instruction represents the strength of an instruction issued when the audience member selects the number of a choice (see FIG. 6).

As described above, when the audience member selects a number as a choice during the program, the selected number is incorporated into the instruction data, which are then transmitted to the system 1, whereby the system 1 becomes able to aggregate the instruction data.

FIG. 6 diagrams for explaining operation of the present invention (generation of instruction data). The diagrams show the steps of operation of the audience member's terminal 2 when the audience member watches a program and generates instruction data. FIG. 6A shows a flowchart, and FIG. 6B exemplifies a weighting table. As the need arises, the terminal 2 downloads from the system 1 a program for executing illustrated various processes, the weighting table, and data such as a timer value.

In step S21, the terminal 2 sets a direction ID. Specifically, the terminal 2 acquires the direction ID of a program which is currently displayed on the screen in real time and incorporates it into the instruction data. In step S22, the terminal 2 displays choices. Specifically, the terminal 2 displays selectable choices for the program which is currently displayed on the screen in real time.

In step S23, the terminal 2 sets an aggregation memory to zero, and clears a continuation timer. In step S24, the terminal obtains the selected choice. Specifically, when the audience member, who is watching the program, selects one of the choices displayed on the screen (S22), the terminal 2 obtains the selected choice.

The terminal 2 determines whether or not the audience member has selected a choice (S25). When selected (Yes), the processing proceeds to step S26. When not selected (No); i.e., when it is determined that no choice has been selected, the terminal 2 ends the processing.

In step S26, the terminal 2 determines whether the relation "continuation timer < threshold" and the relation "choice (selected value) = immediately previous choice (selected value)" are both satisfied. Specifically, the terminal 2 determines whether the currently selected choice is equal to the choice selected immediately before the present time, and whether the interval of the selections falls below the threshold. In the case of Yes (the same choice number is judged to have been selected at an interval falling below the threshold), the terminal 2 determines that the enthusiasm of the audience member is very high, and adds "1" into the aggregation memory (S27). The processing returns to step S24, whereby the above-described operation is repeated. In this manner, when the audience selects the same choice number repeatedly at intervals falling below the threshold, the value of the aggregation memory is increased by a value corresponding to the number of times of the continuos selections. Meanwhile, when an No determination is made in step S26; i.e., when the terminal 2 determines that the same choice number is not repeatedly selected at intervals falling below the threshold, the processing proceeds to step S28.

In step S28, the terminal 2 sets an instruction strength on the basis of the cumulative value while weighting it. Specifically, the terminal 2 converts the cumulative value stored in the aggregation memory to an instruction strength in accordance with a weighting table of FIG. 6B, which will be described later, and incorporates it into the instruction data (at this time, the value (number) of the selected choice is also incorporated in the instruction data).

In step S29, the terminal 2 transmits the instruction data. Specifically, the terminal 2 incorporates the direction ID (S21), the selected number, and the instruction strength (S28) into the instruction data shown in FIG. 5. Moreover, the terminal 2 incorporates the sender ID of the terminal 2 into the instruction data, and transmits the data to the system 1. In step S30, the terminal 2 sets the aggregation memory to 1, and clears the continuation timer. Subsequently, the terminal 2 returns to step S24 so as to repeat the above-described operation.

By virtue of the above-described operation of incorporating, into the instruction data of FIG. 5, the direction ID (S21), the selected number and the instruction strength (S28), and the sender ID of the terminal 2, and transmitting the data to the system 1, the instruction strength regarding the audience member's selection of a choice can be converted to a numerical value, the numerical value can be incorporated into the instruction data along with the value of the choice, and the data can be transmitted to the system 1. In the present embodiment, when the value of the choice selected in step S26 of FIG. 6 is equal to the value of the choice selected immediately before, and the interval of the selections falls below the threshold, the value stored in the aggregation memory 1 is increased by a value corresponding to the number of times of the continuous selections, whereby the degree of enthusiasm of the audience member is obtained as a value to be stored in the aggregation memory. However, the present invention is not limited thereto, and the embodiment may be modified in such a manner that when an analog controller (e.g., a joystick) is pressed strongly and continuously, the enthusiasm of the audience member is determined to be high, and a corresponding large value is stored in the aggregation memory.

FIG. 6B shows an example of the weighting table. This table is used to convert a continuous selection number to an instruction strength. The continuous selection number refers to the total count; i.e., the number of times the number (value) of the same choice is continuously selected at intervals falling below the threshold. The table is set as shown in FIG. 6B, for example.

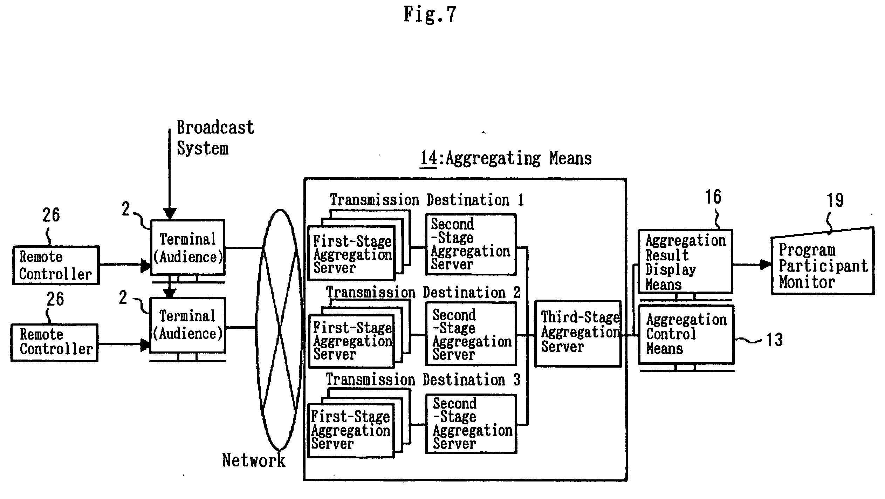

FIG. 7 shows a diagram of an aggregation system of the present invention. The terminal 2, the aggregation control means 13, the aggregating means 14, and the aggregation result display means 16 shown in FIG. 7 correspond to those of the same reference numerals in FIG. 1. Each of remote controls 26 shown in FIG. 7 is identical with that shown in FIG. 4B and is used to enter the value of a choice when a display image (presentation of choices) of FIG. 4A, for example, is displayed on the screen of the terminal 2.

The aggregating means 14 receives and aggregates a large volume of instruction data (e.g., several millions of data items) simultaneously transmitted from the terminals 2. In the illustrated example, the aggregating means 14 includes first-stage aggregation servers, second-stage aggregation servers, and a third-stage aggregation server, which are hierarchicaly connected, to thereby enable simultaneous aggregation of a large volume of instruction data. Transmission destinations 1, 2, 3, etc. assigned to the first-stage aggregation servers are determined in such a manner that transmission of instruction data to the terminals 2 is divided for distributed operation on an region-by-region basis, a network-by-network basis, or a provider-by-provider basis. The transmission destinations are determined in such a manner that the volume of instruction data which are transmitted from the terminals 2 to the corresponding first-stage aggregation server does not exceed the volume that the first-stage aggregation server can receive simultaneously. The first-stage aggregation servers aggregate the contents (e.g., frequencies of values of choices and instruction strengths) of instruction data received from the terminals 2, and transmit aggregation results to the higher-level, second-stage aggregation servers. Similarly, the second-stage aggregation servers aggregate the aggregation results, and transmit second aggregation results to the higher-level, third-stage aggregation server. Moreover, the third-stage aggregation servers aggregates the second aggregation results to thereby obtain the aggregation result in relation to all the instruction data.

The aggregation result display means 16 displays on a program participant monitor 19 the overall result of aggregation provided from the third-stage aggregation server and requests a program participant to perform an action. Further, the aggregation result display means 16 gradually reduces the rotation speed of the roulette wheel displayed in the background of the program shown in FIG. 3 in such a manner that the roulette wheel stops at a position corresponding to a value corresponding to the selected choice. The aggregation control means 13 controls the entire aggregation operation.

As described above, the transmission destinations to which a large number of terminals 2 transmit instruction data are divided on an region-by-region basis, network-by-network basis, or provider-by-provider basis, in such a manner that the instruction data are transmitted to the first-stage aggregation servers, and the first-stage aggregation servers aggregate instruction data and transmit aggregation results to higher-level aggregation servers. This operation is repeated in order to enable simultaneous receipt and aggregation of a large volume of instruction data (several millions of data items).

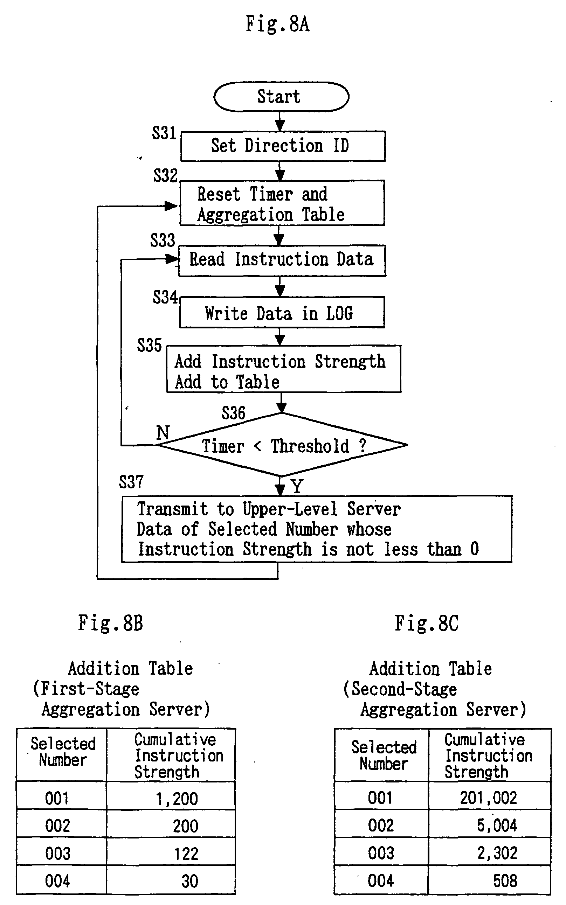

FIG. 8 shows diagrams for explaining operation of the present invention (aggregation, part 1). FIG. 8A is a flowchart for explaining operations of the first-stage servers and second-stage servers of FIG. 7.

In step S31, each server sets a direction ID. In step S32, the server resets (0-clears) a timer and an addition table. In step S33, the server reads instruction data. Specifically, the server reads instruction data which have been received from the terminal 2 and reside in a buffer, or instruction data which have been received from the first-stage aggregation server and reside in a buffer.

In step S34, the server writes a log. In step S35, the server adds an instruction strength to the addition table. Specifically, when the server is a first-stage aggregation server, the server adds a numerical value representing instruction strength contained in the instruction data read in step S33 to a numerical value in a cumulative instruction strength column of the addition table (of the first-stage aggregation server) shown in FIG. 8B, the numerical value being located at a row position corresponding to a selected number. When the server is a second-stage aggregation server, the server adds a numerical value representing instruction strength contained in the instruction data read in step S33 to a numerical value in a cumulative instruction strength column of the addition table (of the second-stage aggregation server) shown in FIG. 8C, the numerical value being located at a row position corresponding to a selected number.

In step S36, the server determines whether the value of the timer falls below a threshold value. In the case of Yes, the server proceeds to the next step S37, and transmits to a corresponding higher-level server (in this case, a second-stage aggregation server or a third-stage aggregation server) data of selected numbers and instruction strengths which are higher than zero. Meanwhile, in the case of No, the server returns to step S33 to read the next instruction data set, and repeats the processing in step S34 and subsequent steps.

The above-described configuration enables the first-stage aggregation servers to aggregate instruction data received from the terminals 2 and to transmit aggregation results to the second-stage aggregation servers, and also enables the second-stage aggregation servers to aggregate the received data and to transmit aggregation results to the third-stage aggregation server.

FIGS. 8B and 8C show examples of the addition tables (of the first-stage aggregation servers and the second-stage aggregation servers, respectively). In the present embodiment, the illustrated addition tables are provided for each direction ID; and aggregation is performed through an operation of successively adding instruction strengths to the cumulative instruction strength at a row corresponding to each selected number. The contents of the addition table are transmitted to the corresponding upper-level aggregation server as an aggregation result.

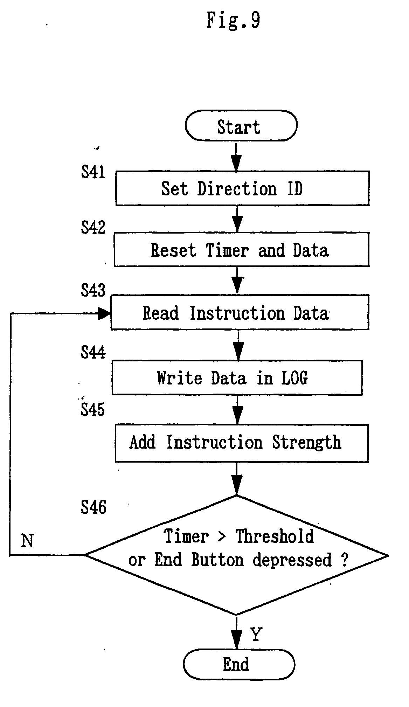

FIG. 9 is a flowchart for explaining operation of the present invention (aggregation, part 2). This flowchart shows operation of the aggregation control means 13 shown in FIGS. 1 and 7.

In step S41, the aggregation control means 13 sets a direction ID. In step S42, the aggregation control means 13 resets (zero-clears) a timer and data. In step S43, the aggregation control means 13 reads instruction data output from the third-stage aggregation server.

In step S44, the aggregation control means 13 writes a log. In step S45, the aggregation control means 13 adds an instruction strength. In step S46, the aggregation control means 13 determines whether the value of the timer has exceeded a threshold value or an end button has been depressed. In the case of Yes, the aggregation control means 13 determines that the aggregation has ended, and thus ends the aggregation processing. In the case of No, the aggregation control means 13 returns to step S43 and repeats the above-described operation.

Through the above-described operation, the aggregation control means 13 shown in FIGS. 1 and 7 completes the aggregation of entire instruction data, whereby a final aggregation result can be generated.

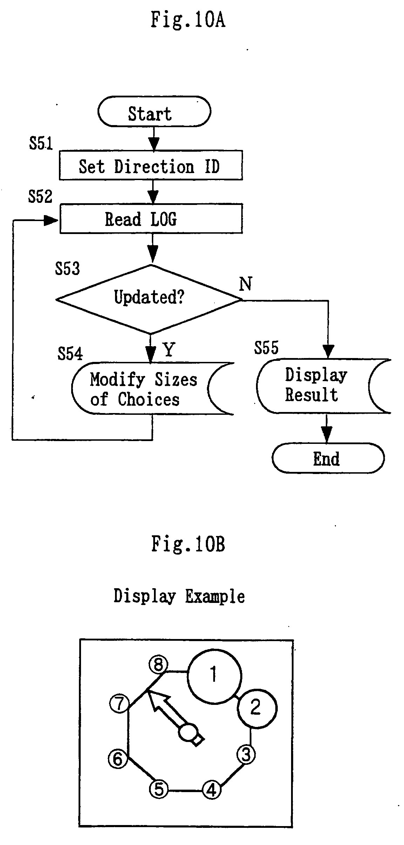

FIG. 10 shows diagrams for explaining the present invention (display of aggregation result). FIG. 10A shows a flowchart, and FIG. 10B shows an example method of displaying the aggregation result in which the sizes are modified.

In step S51, a direction ID is set. In step S52, the log is read. In step S53, a determination is made as to whether or not updating has been performed. Specifically, a determination is made as to whether or not the log read in step S52 (the log containing the aggregation result obtained through aggregation of instruction data) has been updated. In the case of Yes, in step S54, the size of a choice(s) surrounding numbers corresponding to a selected circle(s) is changed. For example, when choice 1 among choices displayed as shown in FIG. 10B is the most popular choice, the size of the circle surrounding the choice 1 is enlarged. When a No determination is made in step S53, the result is displayed (S55), and the processing is ended.

By virtue of the above-described operation, the result of aggregation of instruction data can be displayed as shown in, for example, FIG. 10B, in which among choices 1 to 8, choice 1, being the most popular choice, is displayed with the largest circle. Since the choice 1 is the most popular choice, it is displayed with the largest circle as illustrated, and since the choice 2 is the second most popular choice, it is displayed with the second largest circle.

FIG. 11 shows an example of log data used in the present invention. The log data include instruction data (direction ID, sender ID, selected number, instruction strength), cumulative instruction strength, a time stamp, and a receiver ID. Here, the cumulative instruction strength represents the result of cumulating of instruction strengths for each selected number in relation to each direction ID. The time stamp represents a time of receipt of the instruction data. The receiver ID represents the ID of a server which has received the instruction data (which is the same as the sender ID used for transmission).

FIG. 12 shows a rule employed in the present invention. The rule is set such that the following information items are related with each other.

Row (1) shows a first pattern of the rule, in which a "target person(s)" is determined when the rule is presented, and an "action" is selected from choices by the audience. This pattern is used, for example, in a "*sugoroku*" program.
- In this pattern, the "program participant A" of FIG. 3, is determined, for example, as the "target person(s)" when the rule is presented, and an action of "advancing by four steps" is determined as an "action from choice."
   Row (2) shows a second pattern of the rule, in which an "action" is determined when the rule is presented, and a "target person(s)" is selected from choices by the audience. This pattern is used, for example, in a "Russian roulette" program.
- In this pattern, "eating hot food" is determined, for example, as the "action" when the rule is presented, and a "target person(s) from choice" is determined by the audience.
   Row (3) shows a third pattern of the rule, in which a "combination of an action and a target person(s)" is determined by the audience. This pattern is used, for example, in a "take it and run game."
- In this pattern, a "combination of a target person and an article to be taken" is selected from choices by the audience.

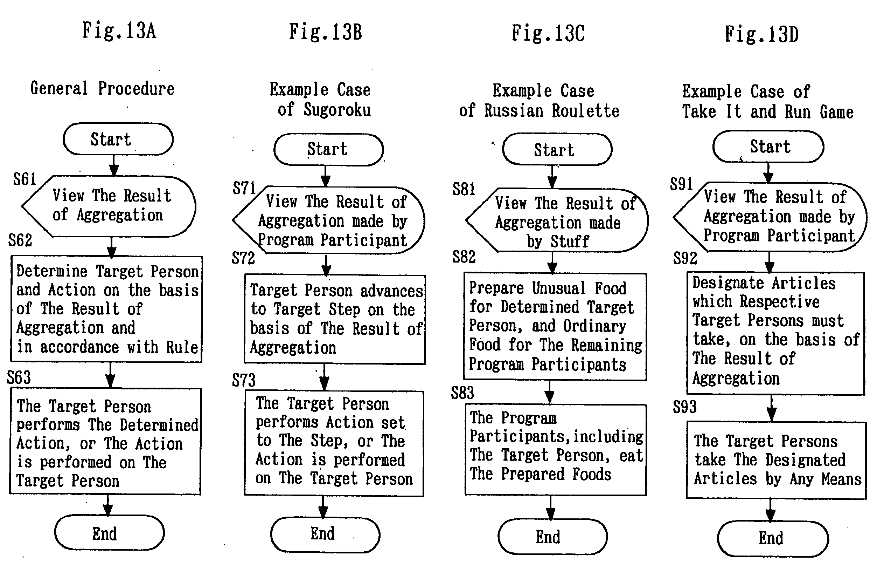

FIG. 13 shows flowcharts for explaining operation of the present invention (specific examples). The flowcharts show examples in which direction is performed on the basis of choice by audience. FIG. 13A shows a general procedure.

In step S61 of FIG. 13A, the audience views the result of aggregation. In step S62, a target person and an action are determined on the basis of the result of aggregation, in accordance with a rule (see FIG. 12). In step S63, the determined target person performs the determined action, or the determined action is performed on the determined target person.

FIG. 13B shows an example case of *sugoroku.* In step S71, the audience views the result of aggregation made by a program participant. In step S72, a target person advances to a designated step on the basis of the result of aggregation ((1) of FIG. 12). In step S73, the target person performs an action set to the step, or the action set to the step is performed on the target person.

FIG. 13C shows an example case of a Russian roulette game. In step S81, the audience views the result of aggregation made by stuff. In step S82, an unusual food is prepared for a determined target person, and ordinary food is prepared for the remaining program participants ((2) of FIG. 12). In step 83, the program participants, including the target person, eat the prepared foods.

FIG. 13D shows an example case of a take it and run game. In step S91, the audience views the result of aggregation made by a program participant. In step S92, articles which respective target persons must take are designated on the basis of the result of aggregation ((3) of FIG. 12). In step S93, the target persons take the designated articles by any means.

As described above, according to the present invention, there is repeated, in real time, a procedure of presenting a rule to audience members, aggregating instruction data from the audience members, the data being weighted on the basis of enthusiasm of the audience members, choosing one of choices in accordance with the result of the aggregation, and advancing the program in accordance with the rule. Therefore, the audience member's enthusiastic directing instruction can be reflected in a program in real time.

## Claims

1. A directing apparatus comprising:
a broadcasting system for broadcasting a program;
aggregating means for aggregating, in real time, instruction data from audience members who watch the program; and
a terminal for allowing the respective audience member to receive the broadcast program, display it on a screen for watching the same, and transmit the instruction data, wherein
the directing apparatus advances in real time the program in accordance with a choice corresponding to the result of the aggregation of the instruction data from the audience members.

2. A directing apparatus according to claim 1, wherein the result of the aggregation and the choice corresponding to the result of the aggregation are display on the screen along with the program.

3. A directing apparatus according to claim 1, wherein a transmission destination of the instruction data is transmitted to the audience member, and the instruction data are received at the transmission destination.

4. A directing apparatus according to claim 1, wherein a target person presented in the program performs an action corresponding to the choice corresponding to the result of the aggregation, or a target person corresponding to the choice corresponding to the result of the aggregation performs an action presented in the program, in accordance with a direction provided in the program.

5. A directing apparatus according to claim 1, wherein a target person and an action are combined in accordance with the choice corresponding to the result of the aggregation, in accordance with a direction provided in the program.

6. A directing apparatus according to claim 1, wherein a server serving as a transmission destination is provided for each audience region, each network, or each provider; and the instruction data from the respective audience member is received and aggregated in real time by the corresponding server, and the result of the aggregation is transmitted in real time to an upper-level server, to thereby aggregate a large amount of instruction data in real time.

7. A directing apparatus according to claim 1, wherein the instruction data include a weighted instruction strength which is determined on the basis of the number of times the audience member selects the same choice within a predetermined period of time, or a selection strength which is obtained from an input device during selection.

8. A directing method comprising the steps of:
broadcasting a program;
receiving and aggregating instruction data in relation to the program from audience members who receive and watch the broadcast program; and
advancing in real time the program in accordance with a choice corresponding to the result of the aggregation of the instruction data from the audience members.

9. A directing method according to claim 8, wherein a target person presented in the program performs an action corresponding to the choice corresponding to the result of the aggregation, or a target person corresponding to the choice corresponding to the result of the aggregation performs an action presented in the program, in accordance with a direction provided in the program.

10. A directing method according to claim 8, wherein a target person and an action are combined in accordance with the choice corresponding to the result of the aggregation, in accordance with a direction provided in the program.

11. A directing method according to claim 8, wherein the instruction data include a weighted instruction strength which is determined on the basis of the number of times the audience member selects the same choice within a predetermined period of time, or a selection strength which is obtained from an input device during selection.
